# EUROPÄISCHE PATENTANMELDUNG

(11) **EP 0 798 033 A1**
(43) Veröffentlichungstag der Anmeldung: **01.10.1997**
(21) Anmeldenummer: 97890055.3
(22) Anmeldetag: 20.03.1997
(51) Int. Cl.: B01D 53/85

(54) **Verfahren zur Reinigung von Abluft und Abluftreinigungsanlage**

(30) Priorität: 26.03.1996 AT 556/96
(71) Anmelder: FUNDER INDUSTRIE GESELLSCHAFT M.B.H., A-9300 St. Veit a.d. Glan (AT)
(72) Erfinder: Zimmer, Helmut, Ing., 9400 Wolfsberg (AT)
(74) Vertreter: Pawloy, Heinrich, Dr.

(57) **Zusammenfassung**

Beschrieben wird ein Verfahren zur Reinigung von bei der Holzwerkstoffplattenherstellung anfallender Abluft enthaltend mikrobiell toxisch wirkende Substanzen, wie Paraffine, Holzöle und Terpene, und eine Anlage zur Durchführung des Verfahrens, wobei die Abluft in einem Gaswäscher vorgereinigt und anschließend in ein oder mehreren nachgeschalteten Biobeeten nachbehandelt wird, dadurch gekennzeichnet, daß die vom insbesondere als Rotationswäscher ausgebildeten Gaswäscher (7) kommende Abluft von oben nach unten durch das/die Biobeet(e) vorzugsweise in Teilluftströme aufgeteilt geleitet wird. Bevorzugt wird das im Gaswäscher anfallende Abwasser und das im Biobeet anfallende Kondensatwasser, gegebenenfalls nach einer Reinigung desselben, dem Wäscher (7) im Kreislauf gekühlt als Waschwasser wieder zugeführt.

## Beschreibung

Die vorliegende Erfindung betrifft allgemein die Reinigung von Abluft. Genauer bezieht sich die Erfindung auf ein Verfahren zur Reinigung von bei der Holzwerkstoffplattenherstellung anfallender Abluft enthaltend mikrobiell toxisch wirkende Substanzen, insbesondere Paraffine, Holzöle, Terpene und dergl., wobei die Abluft in einem Gaswäscher vorgereinigt und anschließend in ein oder mehreren nachgeschalteten Biobeeten nachbehandelt wird.

Bei vielen Produktionsabläufen muß am Entstehungsort mehr oder weniger mit Verunreinigungen belastete Luft abgeführt werden, um die Produkte und/oder die mit deren Produktion befaßten Personen vor diesen Verunreinigungen, die auch Schadstoffe enthalten können, zu schützen, bzw. störende Stoffe in einem Reinigungsprozeß zu entfernen. Beispielsweise werden bei der Herstellung von Hartfaserplatten aus Holzwerkstoff beim mechanischen und thermischen Entwässern des Stoffkuchens in beheizten Mehretagenpressen bei einer Temperatur von ca. 160-240°C erhebliche Mengen an stark belastetem Preßwasser mechanisch ausgepreßt bzw. in Form von Dampf abgegeben.

Das mechanisch ausgepreßte Wasser fließt über die Heizplatten ab und verdampft dabei teilweise. Das restliche Wasser im Stoffkuchen, welches während der sogenannten Lüftphase und dem anschließenden zweiten Prozeßvorgang in Dampfform anfällt, wird gemeinsam mit dem an den Heizplatten entstehenden Dampf in einer Absaughaube gesammelt und über eine Absauganlage abgeleitet. Um den entstehenden Dampf aus dem Bereich der Presse abzusaugen, sind erhebliche Absaugleistungen erforderlich. Die so vom Entstehungsort, gegebenenfalls mit Umgebungsluft vermischte, abgeführte Luft weist außer einem sehr hohen Sättigungsgrad an Feuchtigkeit auch noch weitere unangenehme Schadstoffe auf, welche während des Preßzyklus mit unterschiedlicher Intensität abgegeben werden. Äußerlich ist dieser Vorgang in der Umgebung der Produktionsstätte über eine weit sichtbare Dampffahne erkennbar.

Die bei vorstehend als Beispiel genanntem Herstellungsprozeß abgegebene Abluft beinhaltet, je nach dem wie geschlossen der Wasserkreislauf während des Herstellungsprozesses der Faserplatten betrieben wird, außer dem Wasserdampf noch einige Verunreinigungen, wie z.B. Staub, organ. Säuren, Paraffine, Holzöle und Terpene, Formaldehyde, Kohlenstoff, wasserdampfflüchtige Phenole und Geruchsstoffe.

Bei den vorgenannten Stoffen sind vor allem die Geruchsstoffe die störendsten, da diese von empfindlichen Personen als sehr unangenehm empfunden werden und auch noch in großer Verdünnung bei entsprechender Wetterlage (z.B. Inversionswetterlage) als störend festgestellt werden. Olfaktometrische Messungen haben Geruchsstoffkonzentrationen von 2.000 bis ≥ 5.000 (GE) in der Abluft von Faserplattenpressen ergeben.

Bekannte Verfahren, wie Elektro-Naßfilter, zweistufige Wäscher mit und ohne Chemikalienzusatz, thermische Nachverbrennung oder katalytische Nachverbrennung sind zum Teil wegen hoher Investitionskosten für die gering belastete Abluft unwirtschaftlich und verursachen außerdem, z.B. durch den Einsatz von erforderlichen Chemikalien, Brennstoffen oder Katalysatoren (katalytischem Material), hohe Betriebskosten; einige dieser Verfahren erfordern einen hohen Wartungsaufwand (Bereitstellung und Entsorgung erforderlicher Stoffe) und der Energieaufwand ist bei manchen dieser Verfahren beträchtlich; zum Teil sind diese bekannten Verfahren nur beschränkt zum Abbau der Geruchsstoffe geeignet. Mit Bio-Filtern wurden teilweise recht gute Ergebnisse erreicht, jedoch ist bei der Zusammensetzung der Abluft beispielsweise bei Faserplattenpressen durch die sehr hohe Luftfeuchtigkeit, die für Biosysteme sehr hohe Temperatur und die bei diesem oder ähnlichen Prozessen auftretenden Schwankungen keine dauerhafte biologische Aktivität gesichert. Eine Konsequenz daraus wäre, die Biofilter laufend auszuwechseln, bzw. zu reaktivieren, was wiederum erhebliche Kosten verursachen würde.

Biofilter sind sehr empfindlich, und zur Aufrechterhaltung der Aktivität der im Biobeet einer Filterschicht aus z.B. organischem Material angesiedelten Mikroorganismen muß eine bestimmte Mindestfeuchtigkeit in diesem Material aufrechterhalten werden, da ein Austrocknen der "Biomasse", d.h. des Biobeetes, ein Austrocknen und damit ein Absterben der Mikroorganismen zur Folge hat. Um ein Austrocknen der Biomasse zu vermeiden, wird gemäß bekannter Abluftreinigungsverfahren die abgeführte, verunreinigte Luft, d.h. die Abluft, vor dem Biofilter angefeuchtet, d.h. deren relative Feuchte mittels z.B. Luftbefeuchtern erhöht. Bei einigen Herstellungsprozessen, wie z.B. der einleitend genannten Faserplatten- bzw. Holzwerkstoffplattenherstellung im Naßverfahren, ist dieser Schritt der Feuchtigkeitserhöhung, der von der/ den Presse(n) abgeführten Abluft wegen deren hohen Wasser- bzw. Dampfgehalt, nicht erforderlich.

Abluft mit hohem Wassergehalt ist für den effizienten Betrieb von Biofiltern an sich erwünscht. Es traten und treten jedoch bei bekannten Abluftreinigungsverfahren dann Probleme im Biofilter auf, wenn die Abluft, wie das z.B. bei der oben genannten Holzwerkstoffplattenherstellung der Fall ist, mit hoher Temperatur anfällt und darüber hinaus wie vorgenannt neben den Geruchsstoffen weitere Verunreinigungen mit sich führt und diese bekannt toxisch für die im Biofilter angesiedelten Mikroorganismen sind, wie z.B. die genannten Paraffine, Holzöle, Terpene und dergl.. Diese Schadstoffe können durch ihre Oxidation eine Klumpenbildung im Biofilter verursachen, welche die Durchströmung der Filterschicht beeinträchtigt oder unterbindet, bzw. die Abbauleistung der Mikroorganismen reduziert oder ganz zum Erliegen bringt.

In bekannten Verfahren wird die gesammelte Abluft einem Luftwäscher, z.B. Naßabscheider, einem Venturiwäscher, Kolonnenwäscher und dergl., mittels eines Luftfördersystems, d.h. in Rohrleitungen mittels Ventilator(en), zugeführt, um Aerosole und partikelförmige Verunreinigungen in einem Vorreinigungsschritt aus der Abluft wenigstens großteils auszuwaschen und eine Schädigung der Mikroorganismen hintanzuhalten. Die vorgereinigte Luft nimmt dabei, sofern sie nicht bereits vor diesem Schritt wasserdampfgesättigt ist, Feuchtigkeit auf und wird gegebenenfalls nach Auffangen und Abführen von Wassertröpfchen mittels eines Tropfenabscheiders zu einem nachgeschalteten Biofilter, überführt.

Biofilter haben in ihrem Gehäuse einen von dessen Unterseite beabstandet angeordneten Rost bzw. ein Gitter od. dergl., auf dem ein Biobeet, z.B. faseriges, organisches Material mit darin angesiedelten Mikroorganismen als Filterschicht aufgeschüttet ist. Üblicherweise wird dieses Biobeet gemäß bekannter Verfahren im Biofilter von unten durch den Rost und die Filterschicht nach oben durchströmt. Der Rost dient dazu, das Biobeet zu tragen, die Luftdurchströmung zu ermöglichen und gegebenenfalls ein Abtropfen von Kondensat aus der Filterschicht zu gewährleisten, welches abgeleitet wird, um einen Wasserstau unter dem Rost zu verhindern. Das Biobeet bildet eine Filterschicht bestimmter, der Abbauleistung der darin angesiedelten Mikroorganismen angepaßten Dicke und der Menge der zugeführten, zu reinigenden Luft angepaßten Flächenausdehnung.

Die dem Biobeet zugeführte, vorgereinigte Luft hat wie erwähnt eine hohe relative Feuchtigkeit, welche sich als Wasserfilm an die Partikel des Biobeetes anlagert und in dieses eindringt. Bei den bisher bekannten Abluftreinigungsverfahren bewirkt die Durchströmung des Biobeetes von unten nach oben, daß der untere Bereich der Filterschicht eine sehr starke Anfeuchtung erfährt. Die starke Anfeuchtung der unteren Filterschicht führt zu einem Aufquellen des Filtermaterials in diesem Bereich, wobei das darüber liegende Filtermaterial mit seinem Gewicht eine Verdichtung der untersten Schicht bewirkt. Dies hat zur Folge, daß durch den erhöhten Staudruck, d.h. erhöhte Druckverluste im Biobeet, sich der elektrische Energieeinsatz zum Betrieb der für den Auflufttransport eingesetzten Ventilatoren erhöht und auch der Einsatz von entsprechend leistungsfähigen und damit teuren Ventilatoren erforderlich ist, um dem entgegenzuwirken. Durch Kondensation anfallendes, überschüssiges Wasser fließt zurück nach unten in den Bereich unterhalb des Rostes im Gehäuse des Biofilters, von wo es abgeleitet wird. Eine Wasserabscheidung aus der das Biobeet durchströmenden Luft wird somit in einem für die Mikroorganismen ungünstigen, bzw. bis zu deren Absterben führenden Maße im unteren bzw. untersten Bereich der Filterschicht realisiert, wobei die teilentfeuchtete Luft auf ihrem weiteren Strömungsweg durch die Filterschicht dann nicht mehr genügend Wasser aus ihrer Restfeuchtigkeit abgeben kann, um ein Überleben der Mikroorganismen im Biobeet zu gewährleisten, da das Filtermaterial durch Austrocknung keinen geeigneten Nährboden für die Mikroorganismen bilden kann und letztere nicht genügend Nährlösung zugeführt bekommen. Das Austrocknen des Filtermaterials kann auch dazu führen, daß durch die hindurchströmende Luft Materialpartikel mitgerissen werden, welche, sofern sie nicht weitere Kosten verursachend abgefangen werden, in die Umgebung gelangen.

In der DE-41 29 101-C1 wird ein Verfahren zur Reinigung von Abluft beschrieben, wobei herkömmliche Biofilter durch Biosorber enthaltend nährbodenüberzogene technische Träger mit darauf immobilisierten Mikroorganismen ersetzt werden. Derartige Biosorber werden von der zu reinigenden Abluft von oben nach unten durchströmt. In der Beschreibung werden die Begriffe Biosorber, Biofilter (2-phasig) und Biowäscher (3-phasig) genau definiert und getrennt.

Gemäß der DE-42 35 591-A1 wird bei einem Biofilter über dem Filtersubstrat eine gesonderte, austauschbare Filtermatte vorgesehen, welche Stäube und Aerosole von dem die Mikroorganismen tragenden Filtersubstrat fernhalten soll (Spalte 2, Zeilen 40 bis 44). Gemäß Spalte 2, Zeilen 3 bis 5 und 6 bis 18 der Beschreibung dieses Dokuments ist die Reinigung von Abluft enthaltend Aerosole und/oder Stäube durch Biofilter zumindest problematisch.

Gemäß einem ersten Aspekt ist ein Ziel der vorliegenden Erfindung ein Verfahren zur Reinigung von bei der Holzwerkstoffplattenherstellung anfallender Abluft bereitzustellen, bei dem mikrobiell toxisch wirkende Substanzen enthaltende Abluft durch Biofilter reinigbar ist. Weitere Ziele der Erfindung sind, die Durchströmung und damit die Durchfeuchtung des Biobeetes möglichst gleichmäßig über dessen Ausdehnung verteilt zu erreichen und damit eine homogene Besiedelungsverteilung der Mikroorganismen im Biobeet; im Gaswäscher anfallendes Abwasser und im Biobeet infolge Kondensation und als Abbauprodukt der Mikroorganismen anfallendes "Kondensatwasser" einer Wiederverwertung zuzuführen; die Temperatur der dem Biobeet zugeleiteten endzureinigenden Luft, sowie die Restfeuchte der an die Umgebung abzugebenden endgereinigten Luft zu beeinflussen.

Gemäß einem zweiten Aspekt ist ein Ziel der Erfindung, eine Abluftreinigungsanlage zur Durchführung des erfindungsgemäßen Verfahrens zu schaffen, mit welcher die Ziele des Verfahrens und weitere aus der Beschreibung hervorgehende Ziele erreichbar sind, sowie die Verwendung des erfindungsgemäßen Verfahrens.

Das erstgenannte Ziel der Erfindung wird mit einem Verfahren eingangs erwähnter Art erreicht, welches dadurch gekennzeichnet ist, daß die vom Gaswäscher kommende Abluft von oben nach unten durch das/die Biobeet(e) geleitet wird.

Der Vorteil des erfindungsgemäßen Verfahrens liegt darin, daß die vorgereinigte Luft durch die Behandlung im Gaswäscher weitestgehend von für die Mikroorganismen schädlichen Stoffen befreit ist und in Wasserdampf gesättigtem Zustand in den Biofilter eingeleitet wird und dort während ihres Durchströmens durch die Filterschicht eine allmähliche Entfeuchtung erfährt; dies deshalb, weil vom Filtermaterial im oberen Bereich des Biobeetes nicht aufnehmbares Wasser einerseits durch den Luftstrom in tiefer liegende Bereiche der Filterschicht verbracht wird und andererseits in den oberen Bereichen überflüssiges als auch dort als Abbauprodukt der Mikroorganismen anfallendes "Kondensatwasser" durch Schwerkraftwirkung in tiefer liegende Bereiche der Filterschicht durch das Filtermaterial, d.h. darin befindliche Zwischenräume, tropft oder sickert. Auf diese Weise ist für eine gleichmäßige Durchfeuchtung des Biobeetes gesorgt, die sogar dann aufrecht erhalten bleibt, wenn durch intermittierende Arbeitsweise bzw. bei Betriebsstillständen keine Luft und mit dieser Feuchtigkeit zugeführt wird. Der Nährboden der Mikroorganismen bleibt somit erhalten, und ein Absterben derselben und ein Inaktivwerden des Biofilters in Folge Austrocknung ist vermieden. Ein weiterer Vorteil ist, daß vom durchsickernden Wasser mitgeführte (mitgeschwemmte) bzw. von der Luft mitgeführte Mikroorganismen aus dem oberen Bereich der Filterschicht sich in tieferen Lagen derselben wieder ansiedeln und dort ihre Abbautätigkeit aufnehmen können. Das erfindungsgemäße Verfahren weist also auch den Vorteil auf, daß die zur Initialisierung des Filtermaterials erforderlichen Mikroorganismen während der Durchströmung der endzureinigenden Luft durch diese und durch das Kondensatwasser auf selbsttätige Art für eine Verbreitung der Organismen und eine Aktivierung bzw. laufende Neu- oder Nachaktivierung der Filterschicht gesorgt ist, was einerseits die Effizienz des Biofilters steigert und andererseits das "Animpfen" der Filterschicht mit Mikroorganismen erleichtert. Das Biobeet hat üblicherweise eine Dicke bzw. Höhe von 0,5 bis 1,5 m, abhängig von dessen Durchlässigkeit, d.h. der Partikelgröße und soll einer Flächendruckbelastung von 50 bis 200 m³ Luft pro m² standhalten. Das Filtermaterial kann beispielsweise bei erwähnter Herstellung von Holzwerkstoffplatten aus Abfallstoffen, wie alten Hackschnitzeln, Rindenstücken und dergl. organischem Material zusammengesetzt sein, welches mit altem Substrat, d.h. altem, jedoch noch aktivem Filtermaterial oder Kompost und dergl. angeimpft wurde, um für einen schnellen Aufbau eines aktiven Biobeetes zu sorgen.

Eine besonders effiziente Vorreinigung der Abluft wird erreicht, wenn die Abluft in einem als Rotationswäscher ausgebildeten Gaswäscher vorgereinigt wird.

In einen Rotationswäscher bzw. Rotationsnaßabscheider tritt das zu reinigende Gas, also die Abluft, im unteren Teil tangential in das Wäschergehäuse ein und durch die Zentrifugalwirkung der in Rotation versetzten Luft findet eine Vorreinigung statt. Eine weitere Abscheidung findet im Wäscherboden (ein im Gehäuse eingesetzter Flügelboden in dem die zu reinigende Luft ein turbulentes Wasserbett während der Durchströmung in Rotation erzeugt) statt. Das aufsteigende Gasvolumen wird in der darüber folgenden Rotationswaschzone, in der sich ein Zerstäuberrad befindet, weiter beschleunigt, und es scheiden sich auch kleinste Festpartikel und Aerosole ab, indem sie sich an den erzeugten Wassertröpfchen des feinst zerstäubten Waschmediums anlagern.

Um die Abbautätigkeit der Mikroorganismen längstmöglich aufrecht zu erhalten, ist bevorzugt, wenn im Gaswäscher die mikrobiell toxisch wirkenden Substanzen, insbesondere Paraffine, Holzöle, Terpene und dergl., aus der Abluft abgeschieden werden.

Das für die Vorreinigung der Abluft im Gaswäscher benötigte Waschwasser wird nach Aufnahme der Verunreinigung aus der Abluft als Abwasser abgeleitet. Vorzugsweise kann das Waschwasser wieder dem Produktionsprozeß, z.B. der einleitend genannten Hartfaserplattenherstellung, im Kreislauf zugeführt werden, um dort als Prozeßwasser zum Einsatz zu kommen. Damit wird der Bedarf an frischem Prozeßwasser wesentlich reduziert. In einer Weiterbildung des erfindungsgemäßen Verfahrens ist bevorzugt, wenn das im Gaswäscher anfallende Abwasser gegebenenfalls nach seiner Reinigung dem Wäscher im Kreislauf als Waschwasser wieder zugeführt wird.

Der Verbrauch an Waschmedium kann so auf ein Mindestmaß reduziert werden.

Bevorzugt ist das erfindungsgemäße Verfahren dadurch gekennzeichnet, daß das im Biobeet anfallende Kondensatwasser dem Wasserkreislauf des Gaswäschers zugeführt wird.

Auf diese Weise muß das Kondensatwasser nicht eigens entsorgt werden, sondern wird zur weiteren Steigerung der Effizienz des Verfahrens im Kreislauf geführt, d.h. es gelangt zum Teil mit der Luft aus dem Gaswäscher wieder in den Biofilter. Teilweise wird das Wasser als Abwasser aus dem Gaswäscher abgeleitet, bzw. in den Produktionsprozeß rückgeführt.

Besonders bevorzugt wird das im Kreislauf befindliche Wasser durch Wärmeaustausch temperiert, insbesondere gekühlt. Diese Kühlung bewirkt eine Absenkung der Temperatur der im Gaswäscher vorgereinigten, diesen verlassenden Luft, und durch Regelung der Abkühlung wird ermöglicht, die Temperatur der in den Biofilter einströmenden Luft so zu beeinflussen, daß für eine möglichst lange Lebensdauer der Mikroorganismen in der Filterschicht gesorgt ist. Dadurch werden vorteilhafterweise Kosten und Zeitaufwand für das Regenerieren bzw. Austauschen des Filtermaterials eingespart. Außerdem können Temperaturspitzen in der dem Gaswäscher zugeführten Abluft abgebaut bzw. ausgeregelt werden. Die Reaktion der Temperatur der Abluft durch das gekühlte Waschwasser hat eine erhöhte Kondensation zur Folge, wodurch die Belastung der dem Biobeet zuströmenden Luft weiter reduziert ist.

Eine Weiterbildung des Verfahrens ist dadurch gekennzeichnet, daß die vom Gaswäscher kommende Luft dem/den Biobeet(en) zur Durchströmung des-/derselben in Teilluftströme aufgeteilt wird, wobei jeder dieser Teilluftströme jeweils durch einen begrenzten Bereich der/des Biobeete(s) hindurchgeleitet wird.

Die Verteilung der zugeführten Luft verbessert die Durchströmung des Biofilters und die Verteilung der Feuchtigkeit in diesem, wodurch ein Abbau der in dem Biobeet zugeführten Luft enthaltenen Verunreinigungen über der ganzen Filterfläche erfolgt und dadurch die für die angesiedelten Mikroorganismen erforderlichen Nährstoffe im gesamten Filter bereitstehen, was die Filterleistung beträchtlich erhöht.

Die Strömungsverteilung über der Oberseite der Filterschicht erfolgt bevorzugt durch Regelung ein oder mehrerer Teilluftströme. Es wird damit eine Anpassung der Parameter (Druck, Strömungsgeschwindigkeit) der einzelnen Teilluftströme ermöglicht, wodurch die Nährstoffzufuhr in einzelnen Bereichen des Biobeetes kontrollierbar ist und gegebenenfalls auftretende Überfeuchtung der Filterschicht in deren oberem Bereich kurzfristig ausgleichbar ist, indem man solchen Bereichen vorübergehend keine oder weniger Luft zuführt, damit das Kondensatwasser in tiefere Schichten ablaufen und sich in diesen verteilen kann.

Die im Biofilter endgereinigte Luft, d.h. die Reinluft, wird aus diesem abgeführt und entweicht in die Umwelt. Diese Reinluft weist eine Restfeuchte auf, wodurch es bei ihrem Austreten in die Umgebungsluft zur Bildung einer "Dampffahne" kommen kann. Es ist aufgrund der Sensibilisierung der Bevölkerung in Fragen der Umwelt erwünscht, die Bildung einer solchen Dampffahne zu unterbinden oder weitestgehend zu unterdrücken.

Es ist nach dem Verfahren der Erfindung bevorzugt, wenn die aus dem/den Biobeet(en) abgeführten Reinluft feuchtigkeits- und temperaturgeregelt wird. Der endgereinigten Luft kann trockene, temperierte Luft beigemischt werden und so der Feuchtigkeitsgehalt und die Temperatur der abgeführten Reinluft geregelt werden. Die trockene, temperierte Luft kann dabei z.B. aus Raumabsaugungen entnommen werden, wo sie, abgesehen vom Aufwand für die Aufrechterhaltung und Regelung ihrer Zufuhr zur Reinluft aus dem Biofilter, kostenlos zur Verfügung steht. Es können aber auch Lufttrockner, Kondensatoren, und dergl. dem Biobeet nachgeschaltet werden, bzw. Nachheiz- oder Kühlvorrichtungen.

Wie einleitend angegeben bezieht sich die Erfindung weiters auf eine Abluftreinigungsanlage zur Durchführung des Verfahrens.

Die erfindungsgemäße Abluftreinigungsanlage ist dadurch gekennzeichnet, daß die Anlage ein oder mehrere einem Gaswäscher nachgeschaltete Biobeete aufweist, und Luftführungseinrichtungen, welche die im Gaswäscher vorgereinigte Luft der Oberseite der/ des Biobeete(s) zu- und von deren bzw. dessen Unterseiten abführen.

Die Luftführungseinrichtungen bilden ein Luftführungssystem aus Kanälen oder Rohrleitungen, die von einer Luftabsaughaube zum Gaswäscher, von diesem weiter zum Biofilter führen, in diesen einmünden und von dessen Ausmündung zu einem Reinluftaustritt z.B. am Ende bzw. Kopf eines Kamins führen. Dieses Luftführungssystem ist z.B. durch im Wege desselben angeordnete Gebläse, Lüfter, Ventilatoren und dergl. druckbeaufschlagt. Diese Ventilatoren können bzw. ein einzelner Ventilator kann vor dem Luftwäscher oder zwischen diesem und dem Biofilter angeordnet sein, wobei Luft angesaugt und mit Überdruck weitergeleitet wird. Um gegebenenfalls erforderliche Eingriffe in das Luftführungssystem (z.B. Wartungsarbeiten) während des Betriebes der Anlage ohne Gefahr des Entweichens von nicht endgereinigter Luft durchführen zu können, ist der Ventilator bevorzugt nach dem Biofilter angeordnet, und die Luft wird im Unterdruckbereich geführt, d.h. durch das System gesaugt, was bei einem von oben nach unten durchströmten Biobeet besonders einfach ist.

Eine bevorzugte Ausführungsform der erfindungsgemäßen Anlage ist dadurch gekennzeichnet, daß der Gaswäscher ein Rotationswäscher ist.

Zur Verringerung des Frischwasserbedarfs zur Vorreinigung der Abluft im Gaswäscher ist es bevorzugt, wenn die Anlage einen dem Gaswäscher zugeordneten Wasserkreislauf aufweist, der im Wäscher anfallendes Abwasser, gegebenenfalls nach einer Reinigung desselben, dem Gaswäscher wieder als Waschwasser zuleitet, und besonders bevorzugt, wenn die Anlage eine Einleitung für das im/in den Biobeet(en) anfallende Kondensatwasser in den Wasserkreislauf des Gaswäschers aufweist. Das im Gaswäscher anfallende Abwasser, vorzugsweise nur ein nicht als Waschwasser im Gaswäscher Verwendung findender Teil des Abwassers, kann dem Produktionsprozeß im Kreislauf zugeführt werden und dort als Prozeßwasser zum Einsatz kommen. Das abgeleitete Wasser ist unterschiedlich mit Schadstoffen bzw. Verunreinigungen belastet und um bei bestimmten Gaswäschern ein Verstopfen von z.B. Waschwasserdüsen zu verhindern ist eine bevorzugte Ausführungsform der erfindungsgemäßen Anlage dadurch gekennzeichnet, daß im Wasserkreislauf wenigstens ein Zwischenwasserbehälter zur temporären Aufnahme und zur Reinigung des wieder zu verwendenden Wassers vorgesehen ist. Bei separaten Zwischenwasserbehältern für Abwasser und Kondensatwasser können getrennte Behälter vorgesehen werden, wobei getrennte Zuführleitungen für das Waschwasser oder eine Sammelleitung für dieses vorgesehen sein können. Ebenso ist es möglich in einem Behälter einem oder mehreren Reinigungsschritten unterzogenes Wasser in nachfolgenden "Kaskaden" weiteren Reinigungsprozeduren zu unterwerfen, bevor es der Wiederverwendung zugeführt wird.

Eine weitere Steigerung der Effizienz der Anlage ist in einer weiteren bevorzugten Ausführungsform dadurch möglich, daß wenigstens eine Wärmeaustauscheinrichtung im Wasserkreislauf angeordnet ist.

Erstens kann Abwärme rückgewonnen werden, und zweitens strömt die durch das Waschwasser gekühlte vorgereinigte Luft mit gewünschter Temperatur zum Biobeet, was entscheidenden Einfluß auf die Sorbtionsgeschwindigkeit und auf die Lebensdauer der Mikroorganismen im Biobeet hat, was bei Temperaturschwankungen oder bei zu hoher Temperatur der zugeführten Luft zu verminderter Abbau- bzw. Reinigungsleistung führen kann und in Extremfällen von Übertemperatur zum Erliegen der Endreinigung durch Absterben der Mikroorganismen führt. Die Schadstoffbelastung der vorgereinigten Luft ist wegen der erhöhten Kondensation als Folge der niedrigeren Temperatur der Luft, verursacht durch die Kühlung des Waschwassers, weiter reduziert.

Die dem Biobeet von oben zugeführte Luft verteilt sich naturgemäß von selbst über dessen Oberfläche. Es kann dabei im oberen Bereich der Filterschicht zu unterschiedlicher Anfeuchtung derselben kommen.

Um dem entgegenzuwirken und die homogene Durchfeuchtung des Biobeetes zu begünstigen ist es bevorzugt, wenn die Luftführungseinrichtungen Luftverteilungseinrichtungen zur Aufteilung der dem/den Biobeet(en) zuzuführenden vorgereinigten Luft aufweist.

Bei dieser Ausführungsform der erfindungsgemäßen Anlage findet oberhalb des Biobeetes in der Zuluftkammer ein Druckausgleich statt, wodurch ein homogenes Beaufschlagen der Filterschicht mit über diese gleichmäßig verteilter vorgereinigter Luft erreicht wird. Es ist für den Fachmann erkennbar, daß durch Einsetzen von Luftführungswänden, welche das Biobeet seitlich begrenzen, im Gehäuse des Biofilters oder durch Vorsetzen von Luftführungsoder Luftverteilungskammern vor dem Biofilter auch vorhandene Biofilter, die üblicherweise von unten angeströmt werden, umbzw. nachgerüstet werden können, um dem erfindungsgemäßen Verfahren Rechnung zu tragen. Es können auch die Mündungen der Luftverteilungskanäle einzeln oder in Gruppen durch in das Biobeet von oben einführbare, wenigstens die Zuluftkammer in Einzelkammern teilende Trennwände voneinander abtrennbar ausgebildet sein.

Auch bei gleichmäßigster Verteilung der dem Biofilter zugeführten Luft kann es unter Umständen zu ungleichmäßiger Abbauleistung im Biobeet kommen, was auf unterschiedliche Sorbtionsfähigkeit des organischen Materials, in dem die Mikroorganismen angesiedelt sind, (z.B. aufgrund ungenügender Durchmischung des Materials vor dem Aufschütten auf den Rost, unterschiedlicher Größe und Sorbtionsfähigkeit des aufgeschütteten Materials, unterschiedlicher Schüttdichte oder Alterung desselben und dergl.) zurückzuführen ist.

Diesem Umstand wird vorteilhaft dadurch begegnet, daß die Luftverteilungseinrichtungen Strömungsregeleinrichtungen aufweisen. Einfache Strömungsregeleinrichtungen sind beispielsweise Absperrschieber, Ventile, Klappen und dergl., die manuell betätigt den Strömungsquerschnitt eines Luftverteilungskanales verändern. Auf diese Weise kann Einfluß auf die Verteilung, d.h. die Anund/oder Durchströmung des Biobeetes genommen werden. Wird durch Beobachtung des Biobeetes, durch z.B. im Gehäuse des Biofilters angeordnete Beobachtungsfenster, festgestellt, daß dessen Oberfläche eine unterschiedliche Durchfeuchtung erfahren hat, so ist es möglich, einzelnen Kanälen oder Gruppen derselben mehr und anderen weniger Luft zuzuführen, um so für einen Feuchtigkeitsausgleich zu sorgen. Eine ähnliche Wirkung kann auch erzielt bzw. die vorbeschriebene unterstützt werden, wenn der Biofilter mit Trennwänden ausgerüstet ist, und diese Wände, welche wenigstens die Zuluftkammer in Einzelkammern trennen, gezielt temporär entfernt bzw. so weit hochgehoben werden, daß ein oder mehere Luftströme aus einzelnen Luftverteilungskanälen jeweils zwei oder mehrere Einzelkammern der Zuluftkammer oberhalb des Biobeees zu versorgen hat bzw. haben.

Eine Einzel- oder Gruppensteuerung der Strömungsregeleinrichtung in den Luftverteilungseinrichtungen ermöglicht es auf z.B. von Druck- oder Geschwindigkeitsveränderungen registrierenden Strömungssensoren gemeldete Schwankungen der Durchströmungen zu reagieren. Eine Beseitigung der gemeldeten "Störungen" ist dann durch gegebenenfalls servounterstütztes Ansteuern einzelner oder Gruppen von z.B. Ventile(n) zur Druckbeeinflussung in den Luftverteilungskanälen behebbar. Besonders günstig ist, wenn eine Regelung aufgrund der von den Strömungssensoren an eine Regeleinrichtung weitergeleiteten Signale über an die Strömungsregeleinrichtungen geleitete Ausgangssignale erfolgt.

Wie vorerwähnt hat die aus dem Biofilter abzuleitende Reinluft eine gewisse Restfeuchte. Eine weitere bevorzugte Ausführungsform der erfindungsgemäßen Abluftreinigungsanlage ist dadurch gekennzeichnet, daß die Luftführungseinrichtungen Einrichtungen zum Regeln von Feuchtigkeit und Temperatur der aus dem/den Biobeet(en) abzuführenden Reinluft aufweisen.

Diese Einrichtungen sind in der Reinluftabführung angeordnete, z.B. in den Kamin mündende, beispielsweise mit dem dem Biofilter nachgeordneten Saugventilator verbundene, aus einer Raumabsaugung führende, gegebenenfalls beheizte Zuluftkanäle, über die in Abhängigkeit von der Temperatur am Reinluftaustritt die Austrittstemperatur und -feuchtigkeit der Reinluft steuerbar ist. Es können auch Lufttrockner, Kühler, oder Nachheizer und dergl. zur Regelung eingesetzt werden.

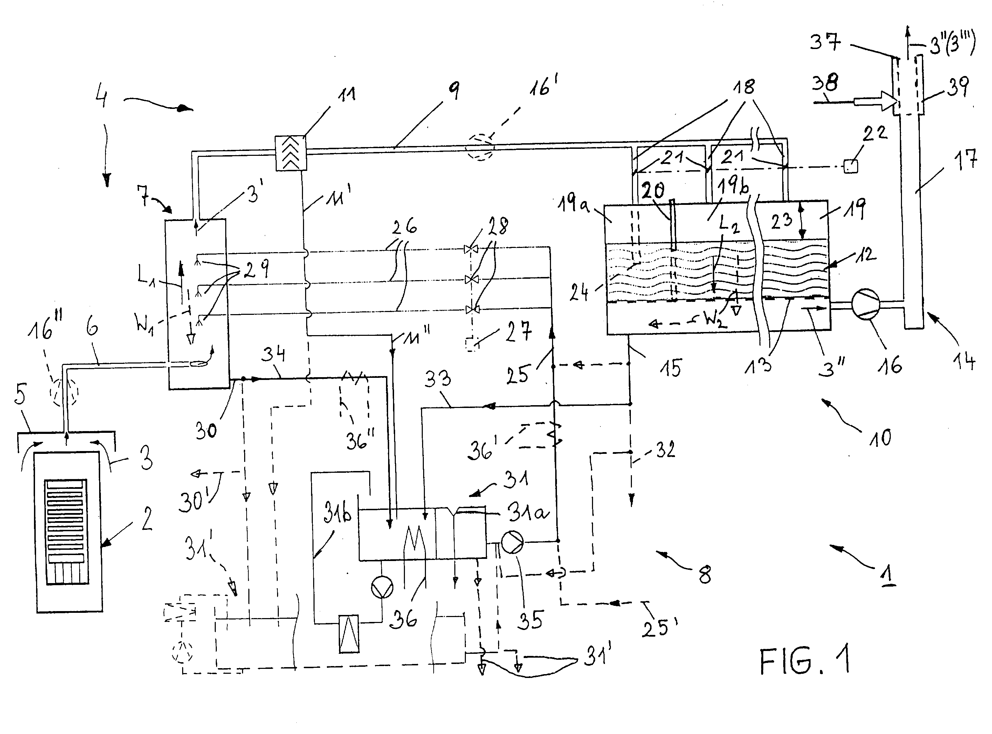

Die Erfindung wird nachstehend unter Bezugnahme auf die beigefügte Zeichnung näher erläutert. Fig.1 zeigt schematisch eine Abluftreinigungsanlage 1, mit der das erfindungsgemäße Verfahren verwirklichbar ist und in der bevorzugte Ausführungsformen der Anlage zusammengefaßt dargestellt sind. Die Abluftreinigungsanlage 1 sammelt am Entstehungsort 2, z.B. einer Faserplattenpresse, die Abluft 3 mittels einer zur Luftführungseinrichtung 4 gehörigen Luftsammeleinrichtung 5 (z.B. einer Absaughaube). Die gesammelte Luft wird über die Absaugleitung 6 dem Luftwäscher 7 zugeführt, den sie in Richtung des Pfeiles L₁ durchströmt. Während der Durchströmung wird die Abluft 3 durch in den Luftwäscher 7 eingeleitetes Wasser aus dem Wasserleitungssystem 8, welches nachstehend beschrieben wird, vorgereinigt.

Die vorgereinigte Luft 3' strömt über die Luftüberführleitung 9 dem Biofilter 10 zu. Auf ihrem Weg kann sie einen Tropfenabscheider 11 passieren, wobei gegebenenfalls aus dem Luftwäscher 7 mitgerissene Wassertröpfchen aus der gesättigten Luft 3' abgeschieden, gesammelt und über die Tropfenableitung 11' abgeleitet werden. Die über die Luftüberführleitung 9 dem Biofilter 10 zugeleitete vorgereinigte Luft 3' wird dem im Filter 10 angeordneten Biobeet 12, welches auf einem gasdurchlässigen Boden 13 (z.B. einem Rost, Spaltenboden oder Gitter und dergl.) angeordnet ist, von oben zugeführt und endgereinigt und verläßt den Biofilter 10 an der Unterseite des Biobeetes 12 als Reinluft 3" über die zum Luftführungssystem 4 gehörige Reinluftableitung 14. Die zu reinigende Luft durchströmt dabei den Biofilter 10 in Richtung des Pfeiles L₂ und gibt Wasser mit darin gelösten Verunreinigungen an im Biobeet 12 angesiedelte Mikroorganismen ab. Überschüssiges und als Abbauprodukt der Mikroorganismen anfallendes Kondensatwasser wird in Richtung der strichlierten Pfeile W₂ unter dem Biobeet 12 gesammelt und über die Kondensatwasserableitung 15 abgeleitet. Zur Druckbeaufschlagung des Luftführungs- und -fördersystems 4 kann ein Saugventilator 16 nach dem Biobeet 12 angeordnet sein, so daß die vor dem Ventilator angeordneten Komponenten der Anlage im Luftunterdruckbereich gefahren werden, und die Reinluft 3" durch einen Kamin 17 abgeleitet wird. Die Druckbeaufschlagung des Luftfördersystems kann aber auch durch einen zwischen Gaswäscher 7 und Biobeet 12 eingesetzten Ventilator, wie bei 16' dargestellt oder aber auch wie bei 16" dargestellt durch einen zwischen Absaughaube 5 und Gaswäscher 7 eingebauten Druckventilator bewerkstelligt werden. Zur besseren Verteilung der in das Biobeet 12 einströmenden vorgereinigten Luft 3' ist eine Luftverteilungseinrichtung, von der hier beispielhaft drei Luftverteilungskanäle 18 dargestellt sind, am Ende der Luftüberführleitung 9 vorgesehen, um die Luft in Teilluftströmen dem Biobeet 12 von oben zuzuführen. Wie dargestellt münden die Luftverteilungskanäle 18 in einer Zuluftkammer 19 oberhalb des Biobeetes 12. Um eine weitere Verbesserung der Anströmung des Biobeetes 12 zu erreichen, können die Mündungen der Luftverteilungskanäle 18 einzeln oder in Gruppen durch in das Biobeet 12 von oben oder seitlich einführbare, wenigstens die Zuluftkammer 19 in, wie im linken Abschnitt des Biofilters 10 dargestellt, Einzelkammern 19a, 19b etc. teilende Trennwände 20 abgetrennt werden. Die Trennwände 20 können z.B. von oben in das Biobeet 12 eingedrückt werden und gegebenenfalls, wie strichliert dargestellt, bis zum Boden 13 durch das Beet durchgedrückt werden. Zur Beeinflussung, d.h. zur Regelung der Strömungsverhältnisse in den einzelnen Luftverteilungskanälen 18 sind vorzugsweise Einrichtungen 21 zur Druckbeeinflussung vorgesehen. Es können einfache selbstregelnde Drosselklappen oder steuerbare Strömungsventile, die auch wie dargestellt mittels einer Regeleinrichtung 22 gegebenenfalls einzeln regelbar sein können, vorgesehen werden. Durch die Beeinflussung der Druckverhältnisse der zuströmenden vorgereinigten Luft 3' ist es möglich, den oberen Bereich des Biobeetes 12 gewünscht so anzuströmen, daß wenigstens ein Teilbereich der Filterschicht einem Rühreffekt unterzogen wird, wodurch gegebenenfalls regional auftretende Undurchlässigkeiten der Filterschicht beseitigt werden können. Eine weitere Möglichkeit einen solchen Rühreffekt herbeizuführen besteht auch darin, die Mündungen der Luftverteilungskanäle 18 der Oberseite des Biobeetes 12 anzunähern oder deren Abstand zu variieren. Dies kann z.B. durch eine nicht dargestellte Hebe- und Senkvorrichtung bewerkstelligt werden, mit der der Boden 13, auf dem das Biobeet 12 ruht, in Richtung des Doppelpfeiles 23 zu bewegen ist oder indem man die Mündungen der Luftverteilungskanäle 18 dem Biobeet 12 annähert, bzw. wie im linken Abschnitt des Biofilters 10 strichliert dargestellt, die Mündungen in das Biobeet 12 in die gezeigte Position 24 absenkt. Damit kann auch eine stärkere Anfeuchtung oder Durchfeuchtung von tieferen Filterschichten erreicht werden.

Das Wasserleitungssystem 8 umfaßt eine Waschwasserzuleitung 25 sowie diverse Wasserableitungen von diversen Komponenten der Abluftreinigungsanlage, wobei mögliche Leitungsführungen strichliert und bevorzugte Leitungsführungen in vollen Linien dargestellt sind. Die Waschwasserzuleitung 25 kann beispielsweise von einer externen Quelle über die Zuleitung 25' gespeist werden. Das Waschwasser wird wie hier dargestellt z.B. über mehrere Speiseleitungen 26, die einzeln oder in Gruppen mittels durch eine Steuereinrichtung 27 verbundene Steuerorgane 28 ansteuerbar bzw. regelbar sind, dem Gaswäscher 7 aus z.B. in mehreren Ebenen angeordneten Düsen 29 zugeführt, um im Gegenstrom in Richtung des Pfeiles W₁ Verunreinigungen aus der Abluft 3 auszuwaschen. Das Abwasser wird über die Abwasserleitung 30 aus dem Gaswäscher 7 abgeleitet und kann beispielsweise einem Abwasserbehälter 31' zugeführt werden. Gleichermaßen kann das im Tropfenabscheider 11 anfallende Wasser über die Tropfenableitung 11' demselben Wasserbehälter 31' zugeleitet werden. Auch das im Biobeet 12 anfallende Kondensatwasser kann über die Kondensatwasserableitung 15 und 32 abgeleitet werden. Bevorzugt wird aber das im Biofilter 10 anfallende Kondensatwasser über die Kondensatwasserableitung 33, die mit dem Wasserbehälter 31 verbunden ist, diesem zugeleitet. Auch das Abwasser aus dem Gaswäscher 7 wird bevorzugt über die Abwasserleitung 34 sowie das im Tropfenabscheider 11 anfallende Wasser über die Tropfwasserableitung 11" dem Wasserbehälter 31 zugeleitet. Im Wasserbehälter 31 wird das gesammelte Wasser mittels Abscheideeinrichtungen, z.B. einem Ölabscheider 31a und einem in einem Nebenstrom 31b liegenden durch eine Pumpe beaufschlagten Nebenstromfilter gereinigt, wobei sich an der Wasseroberfläche sammelnde Stoffe, z.B. mittels Skimmer, und Schweb- bzw. Sinkstoffe entfernt werden und gegebenenfalls einer Weiterverwendung zuführbar sind. Das gereinigte Wasser wird wenigstens teilweise als Waschwasser wiederverwendet und mittels der Pumpe 35 im Kreislauf geführt. Das Abwasser oder das gereinigte Wasser, bzw. ein Teil davon kann auch als Prozeßwasser dem Produktionsprozeß zugeleitet werden, wie bei 30' bzw. 31' angedeutet. Ist ein Wasserbehälter 31', wie vorerwähnt, vorgesehen, so kann auch dieses dort gesammelte Wasser gereinigt werden, bevor es als Prozeß- oder Waschwasser einer Wiederverwendung zugeführt wird. Auch dort kann in einem Nebenstrom mittels Pumpe und Filter eine Reinigung des Wassers ähnlich wie im Wasserbehälter 31 erfolgen. Zum Absenken der Temperatur des im Kreislauf des Wasserleitungssystems 8 befindlichen Wassers wird bevorzugt wenigstens eine Wärmetauscheinrichtung 36, wie hier dargestellt, im Wasserbehälter 31 vorgesehen. Diese Wärmetauscheinrichtung kann aber auch in der Waschwasserleitung, wie bei 36' dargestellt, angeordnet sein, oder es kann auch die oder eine Wärmetauscheinrichtung wie bei 36" in der Abwasserleitung 34 des Gaswäschers 7 angeordnet sein. Eine Abkühlung des Waschwassers bewirkt auch eine Absenkung der Temperatur der vorgereinigten Luft 3', welche vom Luftwäscher 7 dem Biofilter 10 zugeführt wird. Auch in der Überführleitung 9 kann ein Wärmeaustausch durchgeführt werden, um die Temperatur der in den Biofilter einströmenden Luft in einem geeigneten Bereich zu halten. Bei bestimmten Wetterlagen, d.h. ungünstiger Temperatur und Strömungsverhältnissen am Reinluftaustritt 37 des Kamins 17 kann es zur Bildung von Dampffahnen kommen. Um diesem Umstand entgegenzuwirken wird bevorzugt trockene temperierte Luft 38, z.B. aus einer Raumluftabsaugung, der Reinluft 3" zugeführt, wozu Luftmischeinrichtungen 39 im Kamin 17 vorgesehen sind. Somit wird der Reinluft 3" aus dem Biofilter 10 in der Reinluftableitung 14 bzw. im Kamin 17 trockene, temperierte Luft 38 zugemischt und verläßt diese Mischluft 3"' den Kamin 17 an dessen Luftaustritt 37. Diese Mischluft 3"' kann solcherart konditioniert bedenkenlos an die Umwelt abgegeben werden, ohne sichtbare oder riechbare Belästigungen für die Umwelt darzustellen. Die beschriebene Abluftreinigungsanlage zur Durchführung des erfindungsgemäßen Verfahrens eignet sich zum Einsatz überall dort, wo mikrobiell toxisch wirkende, kontaminierte Abluft zu reinigen ist, und es konnte eine wesentliche Reduktion von Geruchsstoffen in z.B. bei erwähnter Faserplattenherstellung an Pressen anfallender Abluft, ausgehend von einer Belastung von 2000 bis über 5000 GE auf einen Wert von unter 200 GE (Geruchseinheiten) erreicht werden.

## Patentansprüche

1. Verfahren zur Reinigung von bei der Holzwerkstoffplattenherstellung anfallender Abluft enthaltend mikrobiell toxisch wirkende Substanzen, wie Paraffine, Holzöle und Terpene, wobei die Abluft in einem Gaswäscher vorgereinigt und anschließend in ein oder mehreren nachgeschalteten Biobeeten nachbehandelt wird, dadurch gekennzeichnet, daß die vom Gaswäscher (7) kommende Abluft von oben nach unten durch das/die Biobeet(e) (12) geleitet wird.

2. Verfahren nach Anspruch 1, dadurch gekennzeichnet, daß die Abluft in einem als Rotationswäscher ausgebildeten Gaswäscher (7) vorgereinigt wird.

3. Verfahren nach Anspruch 1 oder 2, dadurch gekennzeichnet, daß im Gaswäscher (7) die mikrobiell toxisch wirkenden Substanzen aus der Abluft abgeschieden werden.

4. Verfahren nach einem der Ansprüche 1 bis 3, dadurch gekennzeichnet, daß das im Gaswäscher anfallende Abwasser gegebenenfalls nach seiner Reinigung dem Wäscher (7) im Kreislauf als Waschwasser wieder zugeführt wird.

5. Verfahren nach einem der Ansprüche 1 bis 4, dadurch gekennzeichnet, daß das im Gaswäscher anfallende Abwasser gegebenenfalls nach seiner Reinigung dem Produktionsprozeß im Kreislauf als Prozeßwasser zugeführt wird.

6. Verfahren nach Anspruch 4, dadurch gekennzeichnet, daß das im Biobeet (12) anfallende Kondensatwasser dem Wasserkreislauf des Gaswäschers (7) zugeführt wird.

7. Verfahren nach einem der Ansprüche 4 bis 6, dadurch gekennzeichnet, daß das im Kreislauf befindliche Wasser durch Wärmeaustausch temperiert, insbesondere gekühlt wird.

8. Verfahren nach einem der Ansprüche 1 bis 7, dadurch gekennzeichnet, daß die vom Gaswäscher kommende Luft dem/den Biobeet(en) (12) zur Durchströmung des-/derselben in Teilluftströme aufgeteilt wird, wobei jeder dieser Teilluftströme jeweils durch einen begrenzten Bereich der/des Biobeete(s) (12) hindurchgeleitet wird.

9. Verfahren nach Anspruch 8, dadurch gekennzeichnet, daß die Strömungsverhältnisse ein oder mehrere Teilluftströme geregelt werden.

10. Verfahren nach einem der Ansprüche 1 bis 9, dadurch gekennzeichnet, daß die aus dem/den Biobeet(en) (12) abgeführte Reinluft feuchtigkeits- und temperaturgeregelt wird.

11. Abluftreinigungsanlage zur Durchführung des Verfahrens nach einem der Ansprüche 1 bis 10, dadurch gekennzeichnet, daß die Anlage (1) ein oder mehrere einem Gaswäscher (7) nachgeschaltete Biobeete aufweist, und Luftführungseinrichtungen (4, 14), welche die im Gaswäscher vorgereinigte Luft der Oberseite der/des Biobeete(s) (12) zu- und von deren bzw. dessen Unterseiten abführen.

12. Anlage nach Anspruch 11, dadurch gekennzeichnet, daß der Gaswäscher (7) ein Rotationswäscher ist.

13. Anlage nach Anspruch 11 oder 12, dadurch gekennzeichnet, daß die Anlage (1) einen dem Gaswäscher (7) zugeordneten Wasserkreislauf aufweist, der im Wäscher anfallendes Abwasser, gegebenenfalls nach einer Reinigung desselben, dem Gaswäscher (7) wieder als Waschwasser zuleitet.

14. Anlage nach einem der Ansprüche 11 bis 13, dadurch gekennzeichnet, daß die Anlage einen dem Produktionsprozeß zugeordneten Wasserkreislauf aufweist, der im Wäscher anfallendes Abwasser, gegebenenfalls nach einer Reinigung der desselben, dem Produktionsprozeß als Prozeßwasser zuleitet.

15. Anlage nach Anspruch 13, dadurch gekennzeichnet, daß die Anlage (1) eine Einleitung (33) für das im/in den Biobeet(en) (12) anfallende Kondensatwasser in den Wasserkreislauf des Gaswäschers aufweist.

16. Anlage nach einem der Ansprüche 13 bis 15, dadurch gekennzeichnet, daß im Wasserkreislauf wenigstens ein Zwischenwasserbehälter (31) zur temporären Aufnahme und zur Reinigung des wieder zu verwendenden Wassers vorgesehen ist.

17. Anlage nach einem der Ansprüche 13 bis 16, dadurch gekennzeichnet, daß wenigstens ein Wärmetauscher (36, 36', 36") im Wasserkreislauf angeordnet ist.

18. Anlage nach einem der Ansprüche 11 bis 17, dadurch gekennzeichnet, daß die Luftführungseinrichtungen (4, 14) Luftverteilungseinrichtungen (18) zur Aufteilung der dem/den Biobeet(en) (12) zuzuführenden vorgereinigten Luft aufweist.

19. Anlage nach Anspruch 17, dadurch gekennzeichnet, daß die Luftverteilungseinrichtungen (18) Strömungsregeleinrichtungen (21, 22) aufweisen.

20. Anlage nach einem der Ansprüche 11 bis 19, dadurch gekennzeichnet, daß die Luftführungseinrichtungen (14) Einrichtungen (39) zum Regeln von Feuchtigkeit und Temperatur der aus dem/den Biobeet(en) (12) abzuführenden Reinluft aufweisen.
